**Europäisches Patentamt**

**European Patent Office**

**Office européen des brevets**

(19)

(11) Numéro de publication: **0 048 726
B1**

(12) **FASCICULE DE BREVET EUROPEEN**

(51) Int. Cl.³: **A 01 M 7/00**, B 05 B 15/06

(45) Date de publication du fascicule du brevet:
**11.07.84**

(21) Numéro de dépôt: **81900810.3**

(22) Date de dépôt: **01.04.81**

(86) Numéro de dépôt international:
**PCT/FR 81/00046**

(87) Numéro de publication internationale:
**WO 81/02825 (15.10.81** Gazette **81/24)**

(54) DISPOSITIF ORIENTABLE D'EPANDAGE DE LIQUIDE PAR PULVERISATION.

(30) Priorité: **04.04.80 FR 8007894**

(43) Date de publication de la demande:
**07.04.82 Bulletin 82/14**

(45) Mention de la délivrance du brevet:
**11.07.84 Bulletin 84/28**

(84) Etats contractants désignés:
**AT CH DE GB LI LU NL SE**

(56) Documents cités:
**FR - A - 1 434 917**
**FR - A - 2 068 030**
**FR - A - 2 136 494**
**FR - A - 2 216 797**
**US - A - 2 608 792**

(73) Titulaire: **FARINES, Jean-Michel, 2, Rue Fauvelle,
F-66300 Thuir (FR)**

(72) Inventeur: **FARINES, Jean-Michel, 2, Rue Fauvelle,
F-66300 Thuir (FR)**

(74) Mandataire: **Ecal, François, 4, rue Fabrégat,
F-34500 Béziers (FR)**

ACTORUM AG

## Description

La présente invention a pour objet les dispositifs de pulvérisation de liquide en vue des divers traitements qui peuvent être effectués sur les végétaux, qu'il s'agisse de traitements d'insecticides, de fongicides, ou de tous autres traitements tels que des traitements antipollution, appliqués dans les cas particuliers où le matériel connu ne convient pas par suite de son insuffisante mobilité par rapport au véhicule qui le porte et indépendamment de celui-ci.

Les appareils de traitements connus capables d'appliquer des produits liquides pulvérisés sont généralement des appareils spécialement conçus pour les traitements particuliers envisagés. Entre autres, la qualité de la pulvérisation qu'ils sont capables de produire est déterminée par la nature du produit qu'ils ont à épandre. C'est ainsi que, pour les produits fongicides, la pulvérisation recherchée doit être fine de façon à pénétrer profondément à l'intérieur de la végétation à traiter, ce qui nécessite une haute pression sur le liquide pulvérisé et une grande vitesse d'air pour dissocier encore les gouttelettes ainsi formées. Pour l'épandage des produits herbicides au contraire ou même d'engrais liquides, la pulvérisation doit être grossière de façon à ne pas être portée au-delà de la zone qui doit exclusivement être traitée.

De même, la spécialisation de ces appareils adaptés à des traitements déterminés a conduit à donner à chacun une structure spécialement adaptée à la nature des végétaux à traiter. C'est ainsi que les appareils connus de traitements fongicides par exemple sont généralement des appareils capables de circuler dans les rangées des végétaux à traiter, leurs dispositifs de pulvérisation se trouvant situés à la hauteur la plus convenable en fonction de la hauteur desdits végétaux, arbres ou arbustes (US-A No 2608792 et FR-A No 1434917).

Au contraire, les appareils connus de traitements herbicides comportent des dispositifs de pulvérisation placés près du sol et épousant généralement la forme d'une rampe longue située perpendiculairement au sens d'avancement de l'appareil.

De tels dispositifs, tant par la nature de la pulvérisation qu'ils produisent que par la nature des organes d'épandage qu'ils comportent et par leur situation immuable par rapport au sol, ne permettent pas leur adaptation aux différentes conditions de traitements et ils ne conviennent particulièrement pas pour les traitements des hautes futaies ou des haies, et moins encore des canaux dans lesquels le plan de travail est situé en dessous du niveau du sol.

Le dispositif objet de la présente invention permet une telle adaptation aux différentes conditions de travail.

Dans celui-ci, en effet, un appareil de traitement standard est organisé pour pouvoir pulvériser à des pressions variables, afin de permettre l'adaptation des caractéristiques de la pulvérisation à la nature du produit épandu. Pour cela, à la pulvérisation mécanique du liquide est associée une soufflerie d'air dont la vitesse peut varier, et même éventuellement être nulle de manière à assurer, si nécessaire, une parfaite localisation du traitement, ce résultat étant obtenu par l'utilisation d'un appareil connu dont les organes de travail sont munis de variateurs de pression ou de débits. En effet, la soufflerie est animée par un moteur hydraulique à vitesse variable, et le circuit de pulvérisation du liquide comporte un dispositif de décharge du type connu by-pass, ce qui permet, par le jeu réciproque simultané de ses possibilités de réglage, une parfaite adaptation des conditions de travail.

Mais, surtout, l'organe de traitement ainsi équipé est rendu mobile par rapport au bras articulé qui le porte dans les trois plans de l'espace de manière à pouvoir être orienté dans toutes les directions utiles et il est monté sur un engin mobile automoteur comportant un bras élévateur télescopique orientable qui permet d'amener l'appareil de traitement aussi près qu'il est nécessaire de la surface végétative à traiter, quel que soit son niveau par rapport au sol, et même si le traitement à effectuer est en dessous de la surface du sol.

Pour cela, l'organe connu de traitement, qui comporte le dispositif de pulvérisation du liquide et la soufflerie d'air, est porté par une plate-forme située à l'extrémité du bras mobile articulé mû par des vérins hydrauliques, ladite plate-forme étant elle-même mobile par rapport audit bras qui la porte selon les trois axes orthogonaux de l'espace et étant aussi mue au moyen de vérins hydrauliques commandés depuis l'engin automoteur.

Une telle disposition permet donc d'amener l'organe de pulvérisation, lorsque cela est nécessaire, aussi près que possible de la zone à traiter, que celle-ci soit très élevée ou au contraire en dessous du niveau du sol, ou que celle-ci se situe dans le plan horizontal ou vertical.

Les dessins annexés, donnés à titre d'exemple seulement, illustrent un mode de réalisation de l'objet de la présente invention.

La fig. 1 est une vue schématique en élévation de profil de l'objet de la présente invention.

La fig. 2 est une vue schématique en plan du même objet.

La fig. 3 est une vue schématique de l'objet de la présente invention montré dans son utilisation porté par un engin mobile à l'extrémité d'un bras articulé télescopique.

La fig. 4 est une vue stéréoscopique des 3 axes selon lesquels l'organe de pulvérisation peut être déplacé.

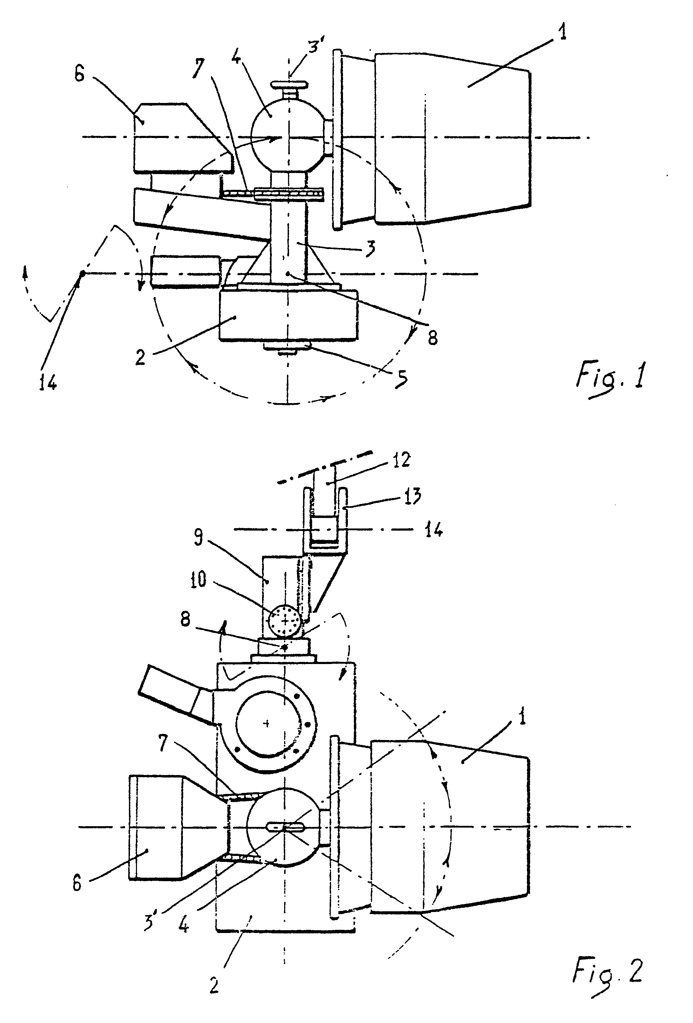

Tel qu'il est représenté, l'objet de la présente invention comporte un dispositif connu diffuseur de pulvérisation 1 (fig. 1) constitué de façon connue par une rampe annulaire de jets de pulvérisation sous pression, non représentée, ou par une turbine de micronisation, placée à la bouche d'un tunnel de ventilation à l'intérieur duquel un courant d'air peut être insufflé au moyen d'une turbine hélicoïde située à l'entrée dudit tunnel.

Selon la présente invention, la turbine hélicoïde et la pompe qui met le liquide sous pression (dans le cas de pulvérisation par jets), sont mues chacune par un moteur hydraulique à vitesse variable, le débit de ladite pompe étant contrôlé par un circuit parallèle de décharge du type by-pass. La vitesse de la turbine peut varier selon la qualité du travail qui doit être effectué et selon la portée de la pulvérisation désirée. Elle peut même être arrêtée lorsque le travail exige la suppression de tout embrun parasite.

Ledit organe de pulvérisation 1 est porté par la plate-forme 2, dont le plan est parallèle à l'axe dudit organe, par l'intermédiaire de la tourelle 3 perpendiculaire au plan de la plate-forme 2. La turbine contenue dans le tunnel 1 peut être entraînée soit par un dispositif moteur contenu dans la tête 4 de la tourelle 3, soit par un dispositif moteur 5 entraîné hydrauliquement situé sous la plate-forme 2 et dont l'axe entraîneur, qui traverse la tourelle 3, meut la turbine par l'intermédiaire d'un renvoi d'angle situé dans la tête 4.

L'organe de pulvérisation 1 ainsi monté sur la tourelle 3 peut osciller de part et d'autre de sa position médiane dans un plan parallèle à la plate-forme 2, autour de l'axe 3' de ladite tourelle, étant entraîné dans ce mouvement d'oscillation par le dispositif hydraulique contenu dans 6 qui commande la tourelle 3 au moyen de la chaîne 7 ou de toute autre liaison connue. Ce mouvement d'oscillation peut, si besoin est, être entretenu selon une fréquence déterminée et variable.

La plate-forme 2 peut elle-même pivoter de 360° autour de l'axe 8 parallèle à son plan et contenu dans le plan vertical orthogonal passant par sa médiane longitudinale, étant porté par le tourillon 9 qui est entraîné dans sa rotation au moyen d'un vérin ou d'un ensemble de vérins 10 qui jouent le rôle de vérins à double effet qui commandent une crémaillère qui coopère avec la couronne dentée solidaire du tourillon 9 (fig. 2).

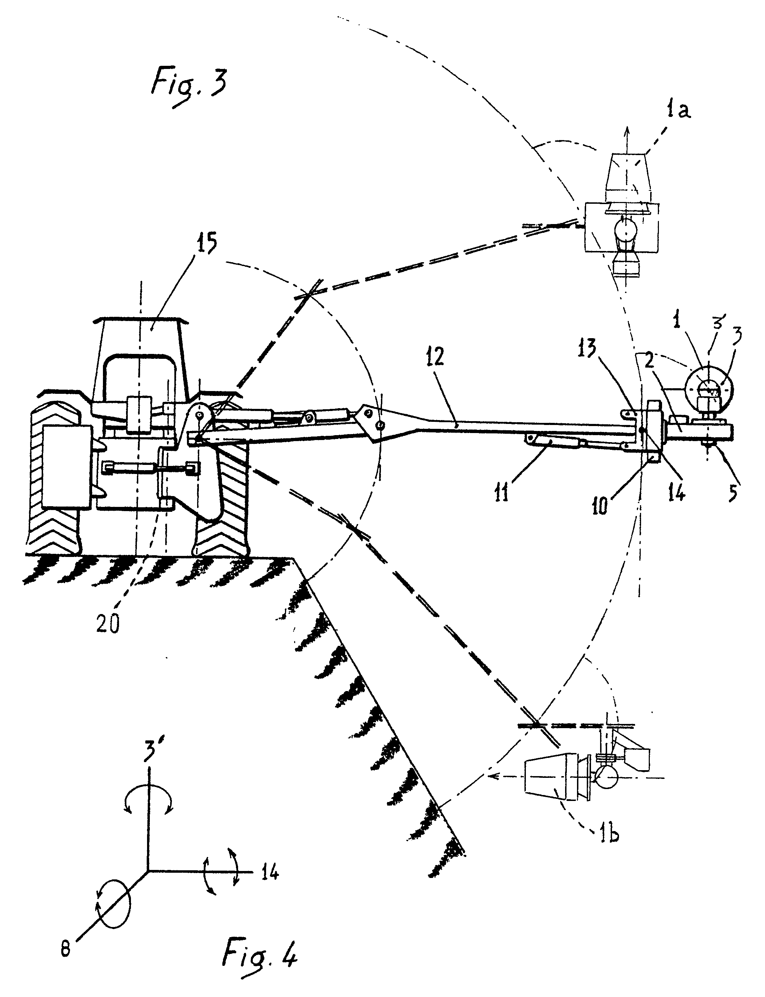

Enfin ladite plate-forme 2 peut se déplacer dans le plan vertical de part et d'autre du plan horizontal, où on tend à la maintenir, grâce au vérin à double effet 11 (fig. 3) qui prend appui sur le bras 12, qui porte l'ensemble, et qui a son point d'application de part et d'autre de ce bras 12 sur la chape 13 dont l'axe 14 est perpendiculaire au plan formé par les axes 3' et 8 précédemment cités; selon un autre mode de réalisation, cette orientation dans le plan vertical de la plate-forme 2 peut être obtenue au moyen d'un vérin à double effet à crémaillère de même type que celui précédemment cité en 10.

On voit donc qu'ainsi, grâce à l'action conjuguée ou indépendante de chacun des mouvements possibles autour des axes orthogonaux 3', 8 et 14, orientés selon les trois directions de l'espace, on peut donner à l'organe de pulvérisation 1 une orientation quelconque pour atteindre aussi bien de hautes futaies dominant l'engin de traitement que les berges des canaux situées en contrebas. En effet, étant monté sur les bras articulés et télescopiques 12 de l'engin mobile 15, ledit organe de pulvérisation 1 peut être placé, comme le montre la fig. 1, à une hauteur variable et dans des directions variables par rapport au sol. Cette hauteur peut être très élevée et la pulvérisation peut avoir une direction verticale (position 1a, fig. 3), lorsque les bras 12 sont totalement déployés et la tourelle 3 placée à l'horizontale; inversement, elle peut être située en dessous du niveau du sol et la pulvérisation orientée vers les berges (position 1b, fig. 3), lorsque le travail nécessite l'une quelconque de ces positions qui sont indiquées en tiretés sur la fig. 3.

Le dispositif étant ainsi constitué, on constate que, grâce aux orientations multiples et quelconques, grâce aussi aux hauteurs extrêmes auxquelles l'engin peut être placé, et grâce enfin aux possibilités de variation de pression sur le liquide et de variation de vitesse sur la turbine de ventilation, il est possible d'utiliser un tel engin pour les travaux les plus variés, de façon parfaitement adaptée aux différents produits utilisés et aux différents résultats recherchés.

En effet, grâce à cette capacité extrême d'adaptation ainsi acquise, il sera possible de pratiquer des traitements insecticides ou fongicides de grand volume et de grande portée depuis un niveau inférieur au niveau du sol jusqu'au sommet des plus hautes futaies, permettant donc le traitement des forêts ou la démoustication des lagunes et des canaux.

Au contraire, pour le traitement de désherbage ou de défeuillage, qui exige la suppression de tout embrun, il sera possible d'approcher au maximum l'organe de pulvérisation du plan à traiter et de supprimer la ventilation tout en diminuant la pression de pulvérisation, de façon à n'atteindre que la zone de traitement en épargnant les zones voisines. On peut donc ainsi traiter sans danger pour le voisinage les canaux pour les focarder, les talus pour les désherber, les haies ou les futaies pour les défolier.

L'objet de l'invention peut être utilisé pour tous les travaux agricoles ou les travaux publics qui peuvent être effectués au moyen de pulvérisation de produits chimiques liquides, les exemples qui en ont été donnés n'étant pas limitatifs, l'ensemble de traitement orientable ainsi constitué pouvant être porté par tout engin mobile pourvu d'une pompe hydraulique et d'un distributeur hydraulique. Ce dispositif qui rend mobile, dans toutes les directions de l'espace, l'organe de traitement peut aussi être utilisé pour l'épangage éventuel de poudres.

## Revendications

1. Dispositif permettant de rendre mobile dans l'espace, par rapport au bras articulé qui le porte, un appareil standard de traitement agricole par pulvérisation (1) monté mobile en rotation sur un axe (3) perpendiculaire à la direction de la projection de la pulvérisation, chacun des mouvements étant librement commandé par voie hydraulique, caractérisé par le fait qu'il est constitué par une plate-forme (2) qui porte l'appareil standard de pulvérisation (1) mobile en rotation sur l'axe (3') perpendiculaire à son plan et qui est elle-même rendue mobile à l'extrémité du bras articulé (12) porté par un engin automoteur (15) selon deux axes orthogonaux entre eux (8) et (14), situés dans un même plan ou dans deux plans parallèles à ladite plate-forme (2) et chacun d'eux étant orthogonal à l'axe (3') de rotation de l'appareil de pulvérisation (1), l'axe (14) solidaire de l'extrémité du bras articulé (12) permettant la rotation dans le plan vertical contenant ledit bras de part et d'autre de celui-ci, et l'axe (8) solidaire d'un élément intermédiaire entre le bras articulé (12) et la plate-forme (2), articulé en (14), permettant la rotation de 360° dans un plan toujours maintenu vertical.

2. Dispositif selon la revendication 1, caractérisé par le fait que la plate-forme (2) qui porte l'appareil standard de pulvérisation (1) est montée à l'extrémité du bras articulé porté par l'engin automoteur (15), ledit bras étant capable d'amener la plate-forme (2) à un niveau inférieur au plan où se meut ledit engin automoteur qui la porte.

3. Dispositif selon la revendication 1, caractérisé par le fait que la mobilité en rotation de l'appareil standard de pulvérisation (1) sur l'axe (3') est obtenue, de part et d'autre de sa position médiane sur plus de 180°, au moyen d'un moteur hydraulique (6) dont le mouvement est transmis par la chaîne (7) à une tourelle (3) tournant autour de l'axe (3').

4. Dispositif selon la revendication 1, caractérisé par le fait que la mobilité en rotation de la plate-forme (2) autour de l'axe (8), parallèle au plan de la plate-forme et orienté selon sa médiane située dans le plan du bras articulé (12) qui la porte, est obtenue sur 360° au moyen du ou des vérins solidaires du bras (12) commandant une crémaillère qui coopère avec une couronne dentée solidaire de la plate-forme (2) selon l'axe (8).

5. Dispositif selon la revendication 1, caractérisé par le fait que la mobilité en rotation dans le plan vertical de la plate-forme (2) autour de l'axe (14), parallèle au plan de la plate-forme et orthogonal à l'axe (8), est obtenue, de part et d'autre du bras articulé (12), au moyen du vérin à double effet (11) ou d'un ensemble de vérins qui coopèrent avec la chape (13) articulée à l'extrémité du bras (12) autour dudit axe (14) perpendiculaire au plan formé par les axes orthogonaux entre eux (3') et (8).

6. Dispositif selon la revendication 1, caractérisé par le fait que la mobilité en rotation dans le plan vertical de la plate-forme (2) autour de l'axe (14), parallèle au plan de la plate-forme et orthogonal au plan formé par les axes orthogonaux entre eux (3) et (8), est obtenue, de part et d'autre du bras articulé (12), au moyen du vérin à double effet (11) qui coopère par l'intermédiaire d'une crémaillère avec une couronne dentée centrée sur l'axe (14).

7. Dispositif selon l'une quelconque des revendications précédentes, caractérisé par le fait que l'organe de pulvérisation standard (1) porté de façon mobile selon l'axe (3') par la plate-forme (2) est mis en fonctionnement pour la pulvérisation, au moyen d'un moteur hydraulique à vitesse variable, monté à l'arrière de l'appareil standard de pulvérisation (1) et mobile en même temps que lui autour de l'axe (3').

**Patentansprüche**

1. Vorrichtung, die es erlaubt, eine landwirtschaftliche Standardeinrichtung (1) zur Zerstäubungsbehandlung gegenüber einem Gelenkarm, der sie trägt, im Raum beweglich zu machen, welche um eine zur Spritzrichtung der Zerstäubung senkrechte Achse (3') drehbeweglich montiert ist, wobei jede ihrer Bewegungen durch hydraulische Mittel frei steuerbar ist, dadurch gekennzeichnet, dass die Vorrichtung von einer Plattform (2) gebildet ist, welche die Standardeinrichtung (1) um die Achse (3') senkrecht zu ihrer Ebene drehbeweglich trägt, und dass die Plattform selber am Ende des von einem selbstfahrenden Fahrzeug (15) getragenen Gelenkarms (12) um zwei zueinander rechtwinklige Achsen (8, 14) beweglich angeordnet ist, die in einer gleichen Ebene oder in zwei zur genannten Plattform (2) parallelen Ebenen angeordnet sind, wobei jeder derselben zur Drehachse (3') der Zerstäubungseinrichtung (1) senkrecht sind, wobei die am Ende des Gelenkarms (12) befestigte Achse (14) eine Drehung in der den Gelenkarm enthaltenden, senkrechten Ebene zu beiden Seiten desselben erlaubt, und wobei die Achse (8) an einem bei (14) angelenkten Zwischenelement zwischen dem Gelenkarm (12) und der Plattform (2) befestigt ist, wodurch eine Drehung von 360° in einer stets senkrecht gehaltenen Ebene möglich ist.

2. Vorrichtung nach Anspruch 1, dadurch gekennzeichnet, dass die die Standardeinrichtung (1) zur Zerstäubung tragende Plattform (2) am Ende des vom selbstfahrenden Fahrzeug (15) getragenen Gelenkarms montiert ist, wobei dieser Arm in der Lage ist, die Plattform (2) auf ein Niveau unterhalb der Ebene zu bringen, auf der sich das sie tragende selbstfahrende Fahrzeug befindet.

3. Vorrichtung nach Anspruch 1, dadurch gekennzeichnet, dass die Drehbeweglichkeit der Standardeinrichtung zur Zerstäubung (1) um die Achse (3') zu beiden Seiten ihrer Mittelstellung um mehr als 180° erhalten wird mittels eines Hydraulikmotors (6), dessen Bewegung durch die Kette (7) auf eine um die Achse (3') drehbare Drehstütze (3) übertragen wird.

4. Vorrichtung nach Anspruch 1, dadurch gekennzeichnet, dass die Drehbeweglichkeit der Plattform (2) um die parallel zu ihrer Ebene und längs ihrer in der Ebene des sie tragenden Gelenkarms (12) angeordneten Mittellinie verlaufende Achse (8) um 360° mittels einer oder mehrerer Hydraulikmotoreinheiten erreicht wird, die am Gelenkarm (12) befestigt sind und eine Zahnstange betätigen, die mit einem an der Plattform (2) entsprechend der Achse (8) befestigten Zahnkranz eingreift.

5. Vorrichtung nach Anspruch 1, dadurch gekennzeichnet, dass die Drehbeweglichkeit der Plattform (2) in der senkrechten Ebene um die Achse (14), die parallel zur Plattformebene und senkrecht zur Achse (8) verläuft, zu beiden Seiten des Gelenkarms (12) erreicht wird mittels eines doppeltwirkenden Zylinders oder eines Zylinderkomplexes, der mit der am Ende des Arms (12) um die genannte, senkrecht zu der von den zueinander rechtwinkligen Achsen (3', 8) gebildeten Ebene angeordnete Achse (14) schwenkbaren Kappe (13) zusammenarbeitet.

6. Vorrichtung nach Anspruch 1, dadurch gekennzeichnet, dass die Drehbeweglichkeit der Plattform (2) in der senkrechten Ebene um die Achse (14), die parallel zur Plattformebene und senkrecht zu der von den beiden zueinander rechtwinkligen Achsen (3', 8) gebildeten Ebene ist, zu beiden Seiten des Gelenkarms (12) erreicht wird durch einen doppeltwirkenden Zylinder (11), der mittels einer Zahnstange mit einem auf der Achse (14) zentrierten Zahnkranz zusammenarbeitet.

7. Vorrichtung nach einem der vorhergehenden Ansprüche, dadurch gekennzeichnet, dass die beweglich längs der Achse (3') der Plattform (2) getragene Standardzerstäubungseinrichtung (1) hinsichtlich der Zerstäubung in Funktion gesetzt wird mittels eines Hydraulikmotors mit variabler Drehzahl, der an der Rückseite der Standardzerstäubungseinrichtung (1) montiert und gemeinsam mit dieser um die Achse (3') beweglich ist.

## Claims

1. A device which enables an appliance to be made movable in space with respect to the articulated arm which carries it, the said appliance being a standard (1) appliance for agricultural treatment by spraying, which is mounted to be movable in rotation about an axis (3') perpendicular to the direction of throw of the spray, each of the motions being freely controlled by hydraulic means, characterized by the fact that it consists of a platform (2) which carries the standard spraying appliance (1) so as to be movable in rotation about the axis (3') perpendicular to its plane, and which is itself made movable at the end of the articulated arm (12) carried by a self-propelled machine (15), about two axes (8) and (14) at right angles to one another and situated in a common plane or in two planes parallel with the said platform (2) and each of them being at right angles to the axis (3') of rotation of the spraying appliance (1), the axis (14) integral with the end of the articulated arm (12) enabling rotation in the vertical plane containing the said arm on opposite sides of it, and the axis (8) integral with a member intermediate between the articulated arm (12) and the platform (2) and articulated at (14) enabling rotation through 360° in a plane which is always kept vertical.

2. A device as in Claim 1, characterized by the fact that the platform (2) which carries the standard spraying appliance (1) is mounted at the end of the articulated arm carried by the self-propelled machine (15), the said arm being capable of bringing the platform (2) to a level lower than the plane where the said self-propelled machine which carries it is moving.

3. A device as in Claim 1, characterized by the fact that the mobility in rotation of the standard spraying appliance (1) about the axis (3') is obtained on opposite sides of its central position through more than 180° by means of a hydraulic motor (6) the motion of which is transmitted through the chain (7) to a turret (3) which turns about the axis (3').

4. A device as in Claim 1, characterized by the fact that the mobility in rotation of the platform (2) about the axis (8) parallel with the plane of the platform and directed along its centreline situated in the plane of the articulated arm (12) which carries it, is obtained over 360° by means of the jack or jacks integral with the arm (12) controlling a toothed rack which cooperates with a toothed crown integral with the platform (2) about the axis (8).

5. A device as in Claim 1, characterized by the fact that the mobility in rotation in the vertical plane of the platform (2) about the axis (14) parallel with the plane of the platform and at right angles to the axis (8), is obtained on opposite sides of the articulated arm (12) by means of the double-acting jack (11) or a group of jacks which cooperate with the yoke (13) articulated to the end of the arm (12) about the said axis (14) perpendicular to the plane formed by the axes (3') and (8) which are at right angles to one another.

6. A device as in Claim 1, characterized by the fact that the mobility in rotation in the vertical plane of the platform (2) about the axis (14) parallel with the plane of the platform and at right angles to the plane formed by the axes (3') and (8) which are at right angles to one another, is obtained on opposite sides of the articulated arm (12) by means of the double-acting jack (11) which cooperates by way of a toothed rack with a toothed crown centred upon the axis (14).

7. A device as in any one of the preceding Claims, characterized by the fact that the standard spraying member (1) which is carried so as to be movable about the axis (3') by the platform (2) is put into operation for the spraying by means of a variable-speed hydraulic motor mounted behind the standard spraying appliance (1) and movable at the same time as it about the axis (3').

Fig. 1

Fig. 2

Fig. 3

Fig. 4